# EUROPEAN PATENT SPECIFICATION

(11) **EP 1 021 696 B1**
(45) Date of publication and mention of the grant of the patent: **23.01.2002**
(21) Application number: 97913686.8
(22) Date of filing: 15.10.1997
(51) Int. Cl.: G01M 3/22, G01M 3/10

(54) **USE OF HYDROFLUOROETHERS AS TEST LIQUID IN THE TESTING OF AN ELECTRONIC COMPONENT**
BENUTZUNG VON HYDROFLUOROETHERN ALS TESTFLÜSSIGKEIT ZUM TESTEN VON ELEKTRONISCHEN BAUTEILEN
UTILISATION D'HYDROFLUOROETHERS COMME LIQUIDE DE TEST LORS DU TEST D'UN COMPOSANT ELECTRONIQUE

(43) Date of publication of application: 26.07.2000
(73) Proprietor: MINNESOTA MINING AND MANUFACTURING COMPANY, St. Paul, Minnesota 55133-3427 (US)
(72) Inventor: GRENFELL, Mark, W., Woodbury, MN 55125 (US)
(74) Representative: Voortmans, Gilbert J.L.
(86) International application number: US9718772
(87) International publication number: WO9919707

(56) References cited:
- US-A- 4 920 785
- US-A- 4 955 726
- US-A- 5 187 432
- US-A- 5 369 983
- K.J. WAREN ET AL.: "The use of new fluorinated solvents in cleaning, coating, and manufacturing operations" NEPCON WEST 96, 25 - 29 February 1996, ANAHEIM , CALIFORNIA , USA, pages 389-393, XP002068095

## Description

### Field of the Invention

The present invention relates to the testing of electronic components using an inert testing liquid.

### Background of the Invention

Electronic components are subjected to various tests depending on their intended application to assure their performance. For example, microelectronics, semiconductor and other components are often sealed in a cavity within a protective packaging material, with lead wires extending from the circuitry to the exterior of the protective package for connection to other components. The protective package is intended to hold the circuitry in place and protect it against corrosion, oxidation, shock, handling, temperature and other problems that can result in failure. To ascertain reliable operation of such sealed electronic packages, testing their hermeticity is required. Further, electronic components are often subjected to thermal shock testing, environmental stress screening (ESS) and liquid burn in test to simulate real operating conditions and to warrant their performance under such conditions.

The aforementioned tests typically involve the use of an inert testing liquid. As inert testing liquid there have been used various fluorinated carbon compounds, including perfluorinated carbon compounds. For example, U.S. Patent No. 4,920,785 discloses the use of FLUORINERT™ Electronic Liquids of the 3M Company such as FC-40, FC-72 and FC-84 in the testing of the hermeticity of an electronic package. U.S. Patent No. 4,955,726 discloses the use of perfluoropolyethers as testing fluids in thermal shock tests, liquid burn in tests and tests for the hermeticity of an electronic package.

U.S. Patent No. 4,736,621 discloses the use of fluoroperhydrofluorene as an inert liquid in testing the hermeticity of an electronic package. U.S. Patent No. 4,896,529 discloses the use of perfluoro-2,3,4-trimethylpentane as an indicator fluid in a gross leak test. U.S. Patent No. 5,369,983 further discloses a test medium that allows for the simultaneous testing of gross and fine leaks in a sealed electronic package. The medium comprises a perfluorinated compound.

The Environmental Stress Screening ("ESS") test is described in Bauerfeind et al., U.S. Patent No. 5,187,432. This test was developed to reduce the time needed to perform the burn-in test. By this method, a device is cycled between a cold bath of an inert liquid and a hot bath of inert liquid while a bias voltage is applied for short periods, which voltage exceeds the nominal voltage of the device. The cold bath is maintained at a maximum temperature of 0°C while the hot bath is maintained at a minimum temperature of 65°C.

Each of these tests uses perfluorocarbon fluids as the test media. The perfluorocarbon fluids have been found to be useful due to their physical properties which include the boiling and freezing points, density, dielectric strength, surface tension, chemical and thermal stability and appearance. In the environmental testing of electronic devices, any or all of these physical properties may be important. The MIL-STD-883E mandates the use of perfluorocarbons in the testing of electronic components.

Since the perfluorocarbons contain no chlorine, they do not damage the Earth's ozone layer, and are not being phased out under the Montreal Protocol. However, due to their chemical stability and long atmospheric lifetime, they have been implicated as having high Global Warming Potentials (GWP) and their use is being increasingly restricted. Thus, there is a need for new fluids for environmental testing of electronic components that exhibit the required performance in the tests, that have no ozone depletion potential (ODP) and show a low global warming potential.

### Summary of the Invention

The present invention provides a method for testing an electronic component comprising exposing the electronic component to a testing liquid characterized in that said testing liquid comprises a hydrofluoroether that is essentially non-flammable. The testing liquid is comprised of 90% by weight to 100% by weight of the hydrofluoroether.

### Detailed Description of the Invention

It has been found that hydrofluoroethers are suitable testing liquids for use in a variety of testing methods typically used to test the performance of an electronic component such as electronic circuit boards or electronic packages. The hydrofluoroethers for use in the method of the invention are essentially non-flammable. Typically the hydrofluoroethers do not exhibit a flash point when tested in a closed cup flash point test performed according to ASTM D 56-87. Suitable hydrofluoroethers typically correspond to the following general formula:

R_{f}(ORₕ)ₙ

wherein:
R_{f} is a perfluorinated alkyl group;
Rₕ is an alkyl group;
n is a number from 1 to 3;
and wherein the number of carbon atoms contained in Rₙ is greater than the total
number of carbon atoms contained in all Rₕ groups.

Preferably, R_{f} comprises between 2 and 8 carbon atoms and is selected from the group consisting of a linear or branched perfluoroalkyl group, a perfluorocycloalkyl group containing perfluoroalkyl group, a perfluorocycloalkyl group, a linear or branched perfluoroalkyl group having one or more catenary atoms, a perfluorocycloalkyl group containing perfluoroalkyl group having one or more catenary atoms and a perfluorocycloalkyl group having one or more catenary atoms.

Most preferably, n is 1; R_{f} is selected from the group consisting of linear or branched perfluoroalkyl groups having from 3 to about 9 carbon atoms, perfluorocycloalkyl-containing perfluoroalkyl groups having from 5 to about 7 carbon atoms, and perfluorocycloalkyl groups having from 5 to about 6 carbon atoms; Rₕ is a methyl or ethyl group; R_{f} can contain one or more catenary heteroatoms; and the sum of the number of carbon atoms in R_{f} and the number of carbon atoms in Rₕ is greater than or equal to 4.

Representative examples include the following compounds : n-C₄F₉OCH₃, n-C₄F₉OCH₂CH₃, CF₃CF(CF₃)CF₂OCH₃, CF₃CF(CF₃)CF₂OC₂H₅, C₈F₁₇OCH₃, CH₃O-(CF₂)₄-OCH₃, C₅F₁₁OC₂H₅, C₃F₇OCH₃, CF₃OC₂F₄OC₂H₅, C₃F₇OCF(CF₃)CF₂OCH₃, (CF₃)₂CFOCH₃, (CF₃)₃COCH₃, C₄F₉OC₂F₄OC₂F₄OC₂H₅, C₄F₉O(CF₂)₃OCH₃, 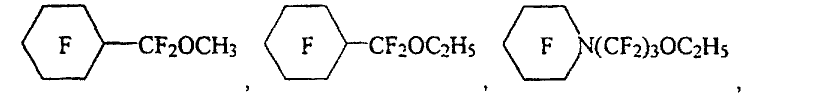 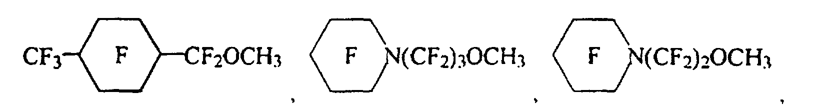 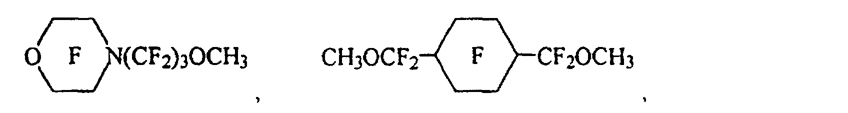 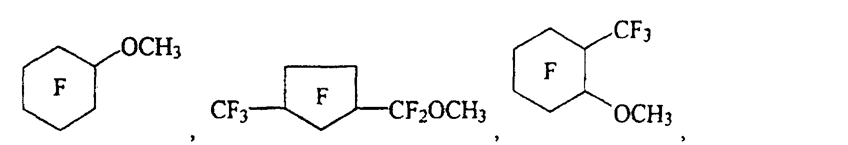 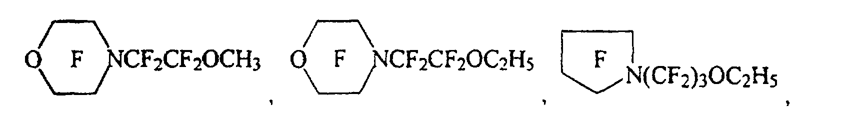 and 1,1-dimethoxyperfluorocyclohexane.

The hydrofluoroethers suitable for use in the process of the invention can be prepared by alkylation of perfluorinated alkoxides prepared by the reaction of the corresponding perfluorinated acyl fluoride or perfluorinated ketone with an anhydrous alkali metal fluoride (e.g., potassium fluoride or cesium fluoride) or anhydrous silver fluoride in an anhydrous polar, aprotic solvent. (See, e.g., the preparative methods described in French Patent Publication No. 2,287,432 and German Patent Publication No 1,294,949) Alternatively, a fluorinated tertiary alcohol can be allowed to react with a base, e.g., potassium hydroxide or sodium hydride, to produce a perfluorinated tertiary alkoxide which can then be alkylated by reaction with alkylating agent.

Suitable alkylating agents for use in the preparation include dialkyl sulfates (e.g., dimethyl sulfate), alkyl halides (e.g., methyl iodide), alkyl p-toluenesulfonates (e.g., methyl p-toluenesulfonate), alkyl perfluoroalkanesulfonates (e.g., methyl perfluoromethanesulfonate), and the like. Suitable polar, aprotic solvents include acyclic ethers such as diethyl ether, ethylene glycol dimethyl ether, and diethylene glycol dimethyl ether; carboxylic acid esters such as methyl formate, ethyl formate, methyl acetate, diethyl carbonate, propylene carbonate, and ethylene carbonate; alkyl nitriles such as acetonitrile; alkyl amides such as N,N-dimethylformamide, N,N-diethylformamide, and N-methylpyrrolidone; alkyl sulfoxides such as dimethyl sulfoxide; alkyl sulfones such as dimethylsulfone, tetramethylene sulfone, and other sulfolanes; oxazolidones such as N-methyl-2-oxazolidone; and mixtures thereof.

Perfluorinated acyl fluorides (for use in preparing the alkoxy-substituted perfluorocompounds) can be prepared by electrochemical fluorination (ECF) of the corresponding hydrocarbon carboxylic acid (or a derivative thereof), using either anhydrous hydrogen fluoride (Simons ECF) or KF.2HF (Philips ECF) as the electrolyte. Perfluorinated acyl fluorides and perfluorinated ketones can also be prepared by dissociation of perfluorinated carboxylic acid esters (which can be prepared from the corresponding hydrocarbon or partially-fluorinated carboxylic acid esters by direct fluorination with fluorine gas). Dissociation can be achieved by contacting the perfluorinated ester with a source of fluoride ion under reacting conditions (see the method described in U.S. Patent No. 3,900,372 (Childs)) or by combining the ester with at least one initiating reagent selected from the group consisting of gaseous, non-hydroxylic nucleophiles; liquid, non-hydroxylic nucleophiles; and mixtures of at least one non-hydroxylic nucleophile (gaseous, liquid, or solid) and at least one solvent which is inert to acylating agents.

Initiating reagents which can be employed in the dissociation are those gaseous or liquid, non-hydroxylic nucleophiles and mixtures of gaseous, liquid, or solid, non-hydroxylic nucleophile(s) and solvent (hereinafter termed "solvent mixtures") which are capable of nucleophilic reaction with perfluorinated esters. The presence of small amounts of hydroxylic nucleophiles can be tolerated. Suitable gaseous or liquid, non-hydroxylic nucleophiles include dialkylamines, trialkylamines, carboxamides, alkyl sulfoxides, amine oxides, oxazolidones, pyridines, and the like, and mixtures thereof. Suitable non-hydroxylic nucleophiles for use in solvent mixtures include such gaseous or liquid, non-hydroxylic nucleophiles, as well as solid, non-hydroxylic nucleophiles, e.g., fluoride, cyanide, cyanate, iodide, chloride, bromide, acetate, mercaptide, alkoxide, thiocyanate, azide, trimethylsilyl difluoride, bisulfite, and bifluoride anions, which can be utilized in the form of alkali metal, ammonium, alkyl-substituted ammonium (mono-, di-, tri-, or tetra-substituted), or quaternary phosphonium salts, and mixtures thereof. Such salts are in general commercially available but, if desired, can be prepared by known methods, e.g., those described by M. C. Sneed and R. C. Brasted in Comprehensive Inorganic Chemistry, Volume Six (The Alkali Metals), pages 61-64, D. Van Nostrand Company, Inc., New York (1957), and by H. Kobler et al. in Justus Liebigs Ann. Chem. 1978, 1937. 1,4-diazabicyclo[2.2.2]octane and the like are also suitable solid nucleophiles.

Examples of test methods of electronic components in which the hydrofluoroether can be used include the testing for the hermeticity of a sealed cavity, a thermal shock test, a liquid burn in test and an environmental stress screening test (ESS). For safety reasons, the hydrofluoroethers are chosen so that they are nonflammable. As a general rule, hydrofluoroethers are not flammable in compounds which the number of C-F bonds exceeds the sum of the number of C-C bonds plus the number of C-H bonds (C-F > C-H + C-C). A more accurate and reliable method is the closed cup flash point test, ASTM D 56-87.

The selection of a particular hydrofluoroether is dependent on the test method used. Generally the hydrofluoroether is chosen such that the boiling point and freezing points provide a sufficient liquid range to conduct the test. In addition, the hydrofluoroether should typically exhibit thermal and chemical stability to the test conditions. Other physical properties such as dielectric strength, density, and surface tension may be considered for use in some environmental tests. For example, the density of the test fluid is preferably considered in the selection of a hydrofluoroether as test liquid in hermeticity testing by the weight gain test. The surface tension is preferably considered in the selection of a hydrofluoroether as test liquid in leak testing, where fluids are chosen to be able to penetrate a small leak. In tests where a bias voltage is applied to an electronic device, the dielectric strength is preferably considered in the selection of a hydrofluoroether as test liquid. The surface tension of the hydrofluoroethers is typically below 0,014 N/m (14 dynes/cm), the density is typically in the range of 1,4-1,6 g/cm³ and the dielectric strength typically in excess of 9000 V/mm.

Hermetic seals are used in a wide variety of applications. For example, in the electronics industry, solid state devices must be protected from the ambient atmosphere to guarantee their continued operation. Ambient air containing moisture can accumulate in the device causing corrosion and failure. High reliability devices are often protected by enclosing the devices in ceramic packages which are hermetically sealed. However, it is not possible to obtain a zero leak rate for every package. The packages must be tested to determine if the leak rate is below a set standard for a given internal sealed volume.

The most common standard employed for ceramic packages is provided in Military Standard ("MIL-STD") 883E, Method 1014.9. Standard leak rates are based on the leak rate of dry air at 25°C flowing through a leak path with a high pressure side of the leak at 1 atmosphere (760 torr absolute) and a low pressure side of the leak at less than 1 torr absolute (1 torr = 133,3 Pa).

In a gross leak testing leak rates between 1x10° atm-cm³/sec and 1x10⁻⁵ atmcm³/sec of dry air are tested. In accordance with the present invention, a hydrofluoroether can be used as a liquid to penetrate the gross leak openings due to their low surface tension. The gross leak test may include a bubble test, a weight gain test, and a test wherein the hydrofluoroether is detected by an analytical technique such as infrared detection. These tests are non-destructive.

Gross leak testing involving the bubble test typically comprises in the order given the steps of (a) pressure bombing the electronic package in a detector fluid bath, (b) removing the electronic package from the detector fluid bath and allowing the electronic package to dry, (c) immersing the electronic package in an indicator fluid at a temperature above the boiling point of the detector fluid and (d) observing whether bubbles appear, the bubbles being indicative of leaks. The hydrofluoroether can be used as the detector fluid or the indicator fluid.

A typical embodiment of the bubble test involves placing the electronic package in a "bombing chamber." The detector liquid is "bombed" into the leaky package under a pressure of up to 0.062 MPa (90 psia) for up to 12.5 hours to force the detector fluid into any leaks in the device. After bombing, the packages are removed and dried.

The packages are then placed into a bubble tank for leak detection. The bubble tank contains an indicator liquid. The indicator liquid is typically heated to about 125°C.+/-5°C. The packages are immersed into the indicator liquid to a minimum depth of about 5cm (two inches). If there is a leak in the package, the detector liquid in the package cavity vaporizes causing bubbles to form. The formation and size of the bubbles are monitored against a lighted, flat black background. If no bubbles form within a 30 second period, the package is considered to have no gross leaks.

The weight gain test is another gross leak test which is commonly used and is described in MIL-STD-883E, Method 1014.9, Test Condition E. The weight gain test detects a leak by measuring the change in weight of a package after the detector fluid has been forced into the package through the leak. The weight gain test comprises the steps of (a) weighing the electronic package, (b) pressure bombing the electronic package in a detector fluid bath, (c) removing the electronic package from the detector fluid bath and allowing the electronic package to dry, (d) weighing the electronic package, a weight gain of the electronic package being indicative of leaks. In accordance with this invention, a hydrofluoroether can be used as the detector fluid.

In accordance with an embodiment of this method, the electronic packages to be tested are cleaned, dried and weighed. The packages are then grouped into "cells" depending upon their internal volume. Packages with an internal volume of less than 0.01 cm³ are put into cells of 0.5 milligram increments and packages with an internal volume greater than or equal to 0.01 cm³ are put into cells in 1 milligram increments.

The packages are typically placed under a 667 Pa (5 torr) vacuum for one hour. The hydrofluoroether detector liquid is admitted into the bombing chamber to cover the packages without breaking the vacuum. The packages are pressurized, for example, to 0.52MPa (75 psia) for two hours. For sensitive parts, a lower pressure may be used with a longer bombing cycle. After bombing, the parts are air dried for approximately two minutes.

The packages are weighed individually and categorized. A package is rejected as a leaker if it gains 1.0 milligrams or more. When the packages are categorized, any package which shifts by more than one cell shall be considered a reject. If a package loses weight, it may be retested after baking for eight hours at 125°C.

Another gross leak test that can be employed involves the detection of the detector fluid by an analytical technique such as infrared detection. Thus, this method comprises in the order given the steps of (a) pressure bombing the electronic package in a detector fluid bath attempting thereby to introduce detector fluid into the cavity; (b) removing said electronic package from the detector fluid to permit a quantity of detector fluid to vaporize and evolve from the cavity as an indication of a leak; and (c) detecting evolving detector vapor by an analytical technique. As detector fluid a hydrofluoroether can be used.

Such a method is described in Etess U.S. Patent No. 4,920,785 and is typically called an NID™ test. The amount of detector fluid (hydrofluoroether) evolving from the package after the bombing step can be measured by measuring the infrared absorption of the atmosphere from the test chamber. The measured amount is proportional to the gross leak size. Other measurement instruments can be used with the NID™ test procedure. These instruments include an ultraviolet spectrometer, a thermal conductivity detector, a photoionization detector and an electron capture detector. The detector system manufactured by Web Technology, Inc. (Dallas, TX) employs an infrared absorption detector.

Preferred hydrofluoroethers for use in a hermetic seal test (bubble test, weight gain test and NID™ test) as detector fluids are as follows in Table 1.

**Table 1**

| **Hydrofluoroether** | **Boiling Point (°C)** |
|---|---|
| C₃F₇OC₂H₅ | 52 |
| C₄F₉OCH₃ | 60 |
| C₄F₉OC₂H₅ | 78 |
| C₅F₁₁OCH₃ | 82 |
| C₄F₉OC₃H₇ | 94 |

C₅F₁₁-O-C₂H₅ (b.p. 96°C) and c-C₆F₁₁-O-CH₃ (b.p. 101°C) can also be used as detector fluids.

Hydrofluoroethers that have a boiling point of more than 125°C can also be used as indicator fluids in the bubble test. Examples thereof are shown in Table 2.

**Table 2**

| **Hydrofluoroether** | **Boiling Point (°C)** |
|---|---|
| C₇F₁₅-OCH₃ | 127 |
| C₇F₁₅-OCH₂CH₃ | 139 |
| c-C₆F₁₁-CF₂-OC₂H₅ | 138 |
| CF₃-O-c-C₆F₁₁-CF₂-O-CH₃ | 148 |
| C₈F₁₇-O-CH₃ | 150 (estimated) |

The hydrofluoroethers can also be used as a testing liquid in thermal shock testing of electronic components. Typically, a thermal shock test comprises the steps of subjecting the electronic component in a first liquid at a temperature between -75°C and -25°C and subjecting the electronic component in a second liquid at a temperature between 100°C and 210°C. The electronic components can be cycled between the first and second liquid several times. Subsequently, the physical and electrical characteristics of the electronic component are tested. The modalities of the thermal shock test are described in MIL-STD-883E, Method 1011.9. The hydrofluoroether can be used as the first and/or second liquid depending on its boiling point and freezing point.

For thermal shock testing a device is contacted with a first fluid at a temperature between -75°C and -25°C, the component is removed from the first fluid and contacted with a second fluid at a temperature between 100°C and 210°C. A hydrofluoroether may serve as either the low temperature fluid, the high temperature fluid or both. Consequently the hydrofluoroether serving as a low temperature fluid must have a freezing point below -25°C, and preferably below -75°C. The hydrofluoroether serving as a high temperature fluid must have a boiling point above 100°C (for MIL-STD-883E, Method 1011.9, test A), above 125°C (Method 1011.9, test B) or above 150°C (Method 1011.9, test C). Thus a hydrofluoroether that meets both the boiling point and freezing point requirements can be used as both the first and second fluid. Temperature excursions of +10°C. for the hot bathes and of -10°C. for the cold baths are allowed. It is typically required that the transfer of the electronic devices from the one to the other bath and vice-versa takes place within very short times, not longer than 10 seconds.

Hydrofluoroethers for use in thermal shock testing of electronic components preferably have a thermal conductivity between 0.5 and 0.8 mWatts/cm-°C and a specific heat between 1,0-1,13 J/g°C (0.24 and 0.27 cal/gm-°C). Preferred hydrofluoroethers that can be used as the first liquid include the following shown in Table 3:

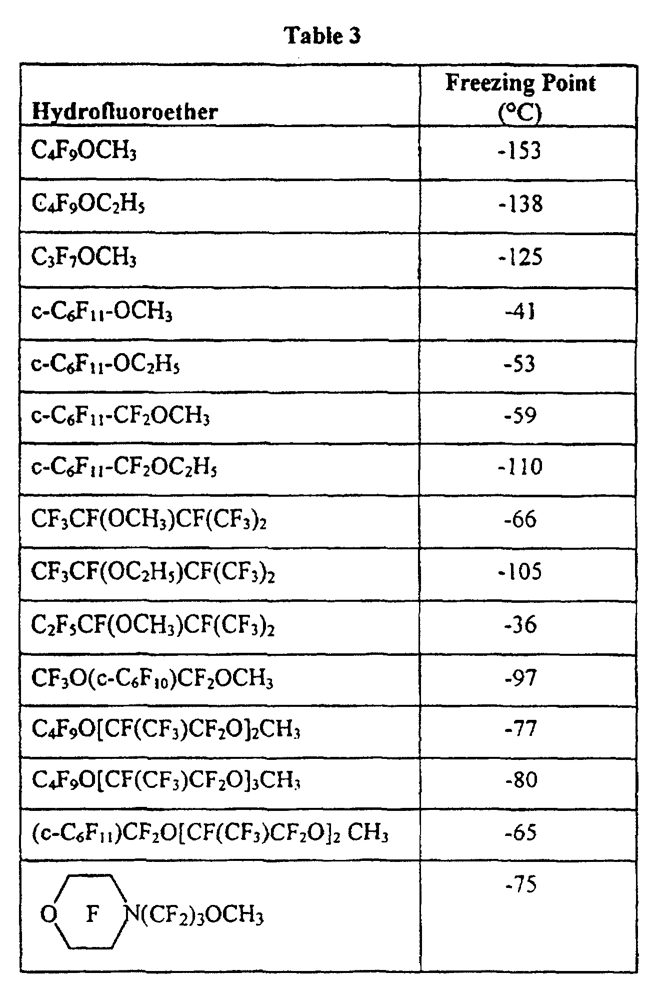

Preferred hydrofluoroethers that can be used as the second liquid include C₆F₁₁OCH₃, as well as those that have a boiling point of more than 125°C listed in Table 2.

Hydrofluoroethers are also suitable for use in environmental stress screening (ESS) tests. Such tests are typically performed to simulate operation of the electronic component over a long period of time, for example, 1 year.

Typically, the test comprises the steps of:
(a) immersing the electronic component in a cold bath of an inert liquid;
(b) applying power supply voltages to the electronic component in excess of the maximum operational voltages upon a first predefined period of time elapsing;
(c) removing the power supply voltages from the electronic component;
(d) transferring the electronic component from the cold bath to a hot bath of an inert liquid within a second predefined period of time;
(e) applying the power supply voltages to the electronic component in excess of the maximum operational voltages as the electronic component is immersed in the hot bath;
(f) removing the power supply voltages from the electronic component; and
(g) repeating steps (a) to (f) for a predefined number of cycles.

As already discussed above in the case of the thermal shock test, depending on the freezing and boiling point of the hydrofluoroether and the actual temperatures used in the cold and hot bath, the hydrofluoroether might be used in the cold bath and/or the hot bath. According to one particular embodiment of this method, the cold bath is used at a temperature below 0°C and the hot bath is used at a temperature of more than 65°C. According to a further embodiment of this method, the cold bath is used at a temperature of-20°C and the hot bath is used at a temperature of more than 85°C. Suitable hydrofluoroethers for use in the cold bath of this latter embodiment are C₄F₉-O-CH₃ and C₄F₉-O-CH₂CH₃. Suitable hydrofluoroethers for use in the hot bath of the latter embodiment include C₄F₉-O-C₃H₇ (BP 94°C) and C₅F₁₁-O-C₂H₅ (BP 96°C) as well as those mentioned above in Tables 1 and 2. Representative hydrofluoroethers useful as a low temperature fluid in environmental stress testing include those shown in Table 3.

A liquid burn in test may also be carried out by placing the electronic component to be tested in a hydrofluoroether as test liquid at a temperature of 100°C, powering the electronic component and gradually increasing the temperature of the testing liquid to a temperature in the range between 125°C and 250°C. Hydrofluoroethers for use in such a burn in test should have a boiling point above the maximum temperature used in the test.

The hydrofluoroethers are further suitable for use in a liquid burn-in test. The liquid burn-in test is performed for the purpose of screening or eliminating marginal devices, those with inherent defects or defects resulting from manufacturing aberrations which cause time and stress dependent failures. It is the intent of this test to stress microcircuits at or above maximum rated operating conditions.

In the liquid burn-in test a microelectronic device is subjected to specific test conditions dependent on the type of device, and its performance and design specifications. The devices are subjected for given time intervals at specified temperatures with a voltage applied to the device or circuit. Generally, the burn-in test is carried out by placing the electronic component to be tested in the hydrofluoroether as test liquid at a temperature of 100°C, applying a voltage to the electronic component and gradually increasing the temperature of the testing liquid to a temperature in the range between 125°C and 250°C. Hydrofluoroethers for use in such a burn in test should have a boiling point above the maximum temperature used in the test. Temperatures for this test are generally above 125 °C, except for large devices known as hybrids or hybrid circuits. Required times at given temperatures are specified by MIL-STD-883E.

The following examples illustrate the invention without however the intention to limit the invention thereto.

### EXAMPLES

### Example 1.

In this example hydrofluoroethers were tested for their passage through standard sized leak capillaries, via vacuum and pressure driving forces. To test for vacuum, the reservoirs for various leak rate glass capillaries (available from General Electric) were filled with liquid C₄F₉OCH₃ samples. A bulb specially fitted with a valve containing a septum port was attached to the glass capillary on the side opposite the reservoir. The bulb was evacuated with the valve closed. The valve was then opened to allow the vacuum to draw on the capillary opening and collect the hydrofluoroether in the bulb. The bulb was sampled after one hour. To evaluate pressurized flow, the reservoir containing C₄F₉OCH₃ was pressurized to 1,93 bar (28 psig) and hydrofluoroether was sampled from the sample bulb at atmospheric pressure. A Hewlett Packard 5890 gas chromatograph (GC) using an electron capture detector (ECD) was employed to detect the presence of C₄F₉OCH₃ material that had passed through the capillary and into the bulb. Table 4 shows the standard leak size (as provided by the capillary manufacturer) and the subsequent average GC response for C₄F₉OCH₃ after one hour exposure to vacuum or pressure.

**Table 4**

| **Standard Leak Rate (atm-cc/sec)** | **GC Measurement (ppm)*** |
|---|---|
| 3.3 X 10⁻³ | 42,500 |
| 3.1 X 10⁻⁴ | 27,000 |
| 2.7 X 10⁻⁵ | 11,000 |
| 3.0 X 10⁻⁶ | No response |

| | |
|---|---|
| * GC concentrations measured via ECD are approximate | |

From the above table it can be seen that C₄F₉OCH₃ is capable of passing to capillary sizes corresponding to a standard leak rate of more than 10⁻⁵ atm-cm³/sec.

### Example 2.

To determine the efficacy of hydrofluoroethers, actual devices were tested. These devices were provided by a major electronics manufacturer and were standard ceramic dual in-line packages (C-Dips). The devices provided by the major electronics manufacturer were known gross, fine and non-leakers from actual production leak testing.

Six known gross leakers were tested using the parameters required by MIL-STD-883E. The devices were evacuated for 35 minutes, covered with C₄F₉OCH₃ as a detector fluid, and pressurized for 65 minutes at 6,20 bar (90 psig). After they were removed from the detector fluid, the devices were immersed in FLUORINERT FC-40™ (available from 3M Company) indicator fluid at 125°C in a Trio-Tech bubble station. All devices evolved large amounts of C₄F₉OCH₃ bubbles and stopped bubbling within 30 seconds, indicating the cavities were completely emptied of detector fluid.

### Example 3.

Using C₄F₉OC₂H₅ as the detector fluid, two gross leaking, two fine leaking and two non-leaking C-Dips were tested as described in Example 2. The bubble test showed bubbles evolving from both gross leakers, and one fine leaker. The other fine leaker and both non-leakers did not evolve bubbles.

### Example 4.

To determine the suitability of hydrofluoroethers in thermal shock testing, liquid burn-in tests and ESS tests, the Graetz Number (N_{Gs}) and the Prandtl Number (N_{Pr}) of a representative hydrofluoroether was calculated according to the formulae described in Bouchop, D.F., and Alves, G.E., "Dimensionless Numbers", CHEM. ENG. PROG., 55, No. 9, pp. 55-64 (1959) and compared to these numbers calculated for a representative perfluorocarbon. The Graetz Number determines the ratio of the thermal capacity of a fluid and the conductive heat transfer in streamline flow. The Prandtl Number determines the ratio of the momentum diffusivity and the thermal diffusivity of a fluid for forced or free convection conditions. The results of these calculations are as follows:

| | C₄F₉OCH₃ | C₈F₁₈ |
|---|---|---|
| Graetz Number | 1702 | 1661 |
| Prandtl Number | 9.9 | 23.7 |

The similar calculated values for the Graetz Number indicate that the ratio of the thermal capacity to conductive heat transfer is essentially identical for perfluorocarbons and hydrofluoroethers and should have nearly equivalent performance under streamline flow conditions. The higher Prandtl Number for the hydrofluoroether is due to the lower viscosity and slightly higher thermal conductivity of hydrofluoroethers. Thus hydrofluoroethers should exhibit higher thermal diffusivity and lower resistance to flow. Accordingly, the Graetz Number and the Prandtl Number show that hydrofluoroethers are suitable candidates for thermal shock, burn-in and ESS testing.

## Claims

1. A method for testing an electronic component comprising exposing the electronic component to a testing liquid **characterized in that** said testing liquid comprises a hydrofluoroether that is essentially non-flammable in an amount of 90% to 100% by weight.

2. A method according to claim 1 wherein said method is selected from the group consisting of:
(a) methods of hermetic seal testing for testing the hermeticity of a sealed cavity within an electronic package;
(b) methods of thermal shock testing;
(c) methods of environmental stress screening testing; and
(d) methods of liquid burn-in testing.

3. A method according to claim 1 wherein said method is a hermetic seal test for testing the hermeticity of a sealed cavity within an electronic package.

4. A method according to claim 3 wherein said hermetic seal test is a gross-leak test comprising, in the order given, the steps of:
(a) pressure bombing the electronic package in a detector fluid bath,
(b) removing said electronic package from said detector fluid bath and allowing the electronic package to dry,
(c) immersing the electronic package in an indicator fluid at a temperature above the boiling point of said detector fluid, and
(d) observing whether bubbles appear, said bubbles being indicative of leaks and wherein said testing liquid is said detector fluid or said indicator fluid.

5. A method according to claim 3 wherein said hermetic seal test is a gross-leak test comprising, in the order given, the steps of:
(a) weighing said electronic package,
(b) pressure bombing the electronic package in a detector fluid bath,
(c) removing said electronic package from said detector fluid bath and allowing the electronic package to dry,
(d) weighing said electronic package, a weight gain of said electronic package being indicative of leaks,
and wherein said testing liquid is said detector fluid.

6. A method according to claim 3 wherein said hermetic seal test is a gross-leak test comprising, in the order given, the steps of:
(a) pressure bombing the electronic package in a detector fluid bath attempting thereby to introduce detector fluid into the cavity;
(b) removing said electronic package from said detector fluid to permit a quantity of detector fluid to vaporize and evolve from said cavity as an indication of a leak; and
(c) detecting evolving detector vapor by an analytical technique.

7. A method according to claim 1 wherein said method is a thermal shock test.

8. A method according to claim 7 wherein said thermal shock test comprises the steps of subjecting said electronic component in a first liquid at a temperature between -75°C and -25°C and subjecting said electronic component in a second liquid at a temperature between 100°C and 210°C and wherein said testing liquid is said first liquid and/or said second liquid.

9. A method according to claim 8 wherein said hydrofluoroether has a freezing point of less than -25°C and/or has a boiling point of more than 100°C.

10. A method according to claim 8 wherein said hydrofluoroether has a freezing point of less than -25°C and a boiling point of more than 100°C and wherein said test liquid is used as said first and second liquid.

11. A method according to claim 1 wherein said method is an environmental stress screening test.

12. A method according to claim 11 wherein said environmental stress screening test comprises the steps of:
(a) immersing said electronic component in a cold bath of an inert liquid;
(b) applying power supply voltages to the electronic component in excess of the maximum operational voltages upon a first predefined period of time elapsing;
(c) removing the power supply voltages from the electronic component;
(d) transferring the electronic component from the cold bath to a hot bath of an inert liquid within a second predefined period of time;
(e) applying the power supply voltages to the electronic component in excess of the maximum operational voltages as the electronic component is immersed in the hot bath;
(f) removing the power supply voltages from the electronic component; and
(g) repeating steps (a) to (f) for a predefined number of cycles,
and wherein said test liquid is said inert liquid of said cold bath and/or said inert liquid of said hot bath.

13. A method according to claim 12 wherein said cold bath is maintained at a temperature of less than 0°C and said hot bath at a temperature of more than 65°C.

14. A method according to claim 1 wherein said method is a liquid burn-in test.

15. A method according to claim 14 wherein said liquid burn in test comprises the steps of placing said electronic component in said testing liquid at 100°C, applying a voltage thereto and gradually increasing the temperature of said testing liquid to a temperature between 125°C and 250°C.

16. A method according to any of claims 1 to 15 wherein said hydrofluoroether corresponds to the following formula:
R_{f}(ORₕ)ₙ
wherein:
R_{f} is a perfluorinated alkyl group;
Rₕ is an alkyl group;
n is a number from 1 to 3; and
wherein the number of carbon atoms contained in R_{f} is greater than the total number of carbon atoms contained in all Rₕ groups.

17. A method according to any of claims 1 to 15 wherein said hydrofluoroether is selected from the group consisting of C₄F₉-OCH₃, C₄F₉-OC₂H₅, c-C₆F₁₁CF₂-OCH₃ and CF₃-O-c-C₆F₁₁-CF₂-O-CH₃.

18. A method according to claim 4 wherein said testing liquid is said detector fluid and said hydrofluoroether is selected from the group consisting of C₃F₇OC₂H₅, C₄F₉OCH₃, C₄F₉OC₂H₅, C₅F₁₁OCH₃, C₅F₁₁OC₂H₅, C₄F₉OC₃H₇ and c-C₆F₁₁-OCH₃.

19. A method according to claim 4 wherein said testing liquid is said indicator fluid and said hydrofluoroether is selected from the group consisting of C₇F₁₅-OCH₃, C₇F₁₅-OC₂H₅, c-C₆F₁₁-CF₂-OC₂H₅, CF₃-O-c-C₆F₁₁-CF₂-OCH₃ and C₈F₁₇OCH₃.

20. A method according to claim 7 wherein said hydrofluoroether is selected from the group consisting of C₄F₉OCH₃, C₄F₉OC₂H₅, C₃F₇OCH₃, c-C₆F₁₁-OCH₃, c-C₆F₁₁-OC₂H₅, c-C₆F₁₁-CF₂-OCH₃, c-C₆F₁₁-CF₂OC₂H₅, CF₃CF(OCH₃)CF(CF₃)₂, CF₃CF(OC₂H₅)CF(CF₃)₂, (C₂F₅)CF(OCH₃)CF(CF₃)₂, CF₃O(c-C₆F₁₀)CF₂OCH₃, C₄F₉O[CF(CF₃)CF₂O]₂CH₃, C₄F₉O[CF(CF₃)CF₂O]₃CH₃, (c-C₆F₁₁)CF₂O[CF(CF₃)CF₂O]₂CH₃ and

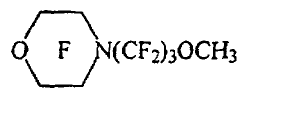

## Patentansprüche

1. Verfahren zum Testen eines elektronischen Bauteils, bei dem das elektronische Bauteil einer Testflüssigkeit ausgesetzt wird, **dadurch gekennzeichnet, daß** die Testflüssigkeit aus einem im wesentlichen nicht entflammbaren Hydrofluorether in einer Menge von 90 Gew.-% bis 100 Gew.-% besteht.

2. Verfahren nach Anspruch 1, wobei das Verfahren ausgewählt ist aus der Gruppe bestehend aus:
(a) Verfahren zum hermetischen Dichtungstesten zum Testen der Hermitezität eines abgedichteten Hohlraums in einem elektronischen Baustein;
(b) Verfahren zum Wärmeschocktesten;
(c) Verfahren zum Environmental Stress Screening-Testen; und
(d) Verfahren zum Flüssigkeitseinbrenn-Testen.

3. Verfahren nach Anspruch 1, wobei das Verfahren ein hermetischer Dichtungstest zum Testen der Hermitezität eines abgedichteten Hohlraums in einem elektronischen Baustein ist.

4. Verfahren nach Anspruch 3, wobei der hermetische Dichtungstest ein Test auf eine große Undichte ist, wobei in der angegebenen Reihenfolge:
(a) der elektronische Baustein in einem Detektorflüssigkeitsbad mit Druck bombardiert wird,
(b) der elektronische Baustein aus dem Detektorflüssigkeitsbad entfernt und trocknen gelassen wird,
(c) der elektronischen Baustein in eine Indikatorflüssigkeit eingetaucht wird, dessen Temperatur über dem Siedepunkt der Detektorflüssigkeit liegt, und
d) beobachtet wird, ob Blasen entstehen, wobei Blasen auf Undichtigkeiten hinweisen und wobei die Testflüssigkeit die Detektorflüssigkeit oder die Indikatorflüssigkeit ist.

5. Verfahren nach Anspruch 3, wobei der hermetische Dichtungstest ein Test auf eine große Undichtigkeit ist, wobei in der angegebenen Reihenfolge:
(a) der elektronische Baustein gewogen wird,
(b) der elektronische Baustein in einem Detektorflüssigkeitsbad mit Druck bombardiert wird,
(c) der elektronische Baustein aus dem Detektorflüssigkeitsbad entfernt und trocknen gelassen wird,
(d) der elektronische Baustein gewogen wird, wobei eine Gewichtszunahme des elektronischen Bausteins auf Undichtigkeiten hinweist, und wobei die Testflüssigkeit die Detektorflüssigkeit ist.

6. Verfahren nach Anspruch 3, wobei der hermetische Dichtungstest ein Test auf eine große Undichtigkeit ist, wobei in der angegebenen Reihenfolge:
(a) der elektronische Baustein in einem Detektorflüssigkeitsbad mit Druck bombardiert wird, wodurch versucht wird, Detektorflüssigkeit in den Hohlraum einzuführen;
(b) der elektronische Baustein aus der Detektorflüssigkeit entfernt wird, damit eine Menge der Detektorflüssigkeit verdampfen und als Anzeichen für eine Undichtigkeit aus dem Hohlraum abgegeben werden kann; und
(c) der entweichende Detektordampf durch eine analytische Technik erfaßt wird.

7. Verfahren nach Anspruch 1, wobei das Verfahren ein Wärmeschocktest ist.

8. Verfahren nach Anspruch 7, wobei bei dem Wärmeschocktest das elektronische Bauelement in einer ersten Flüssigkeit einer Temperatur zwischen -75°C und -25°C und in einer zweiten Flüssigkeit einer Temperatur zwischen 100°C und 210°C ausgesetzt wird und wobei die Testflüssigkeit die erste Flüssigkeit und/oder die zweite Flüssigkeit ist.

9. Verfahren nach Anspruch 8, wobei der Hydrofluorether einen Erstarrungspunkt von unter -25°C und/oder einen Siedepunkt von über 100°C aufweist.

10. Verfahren nach Anspruch 8, wobei der Hydrofluorether einen Erstarrungspunkt von unter -25°C und einen Siedepunkt von über 100°C aufweist und wobei die Testflüssigkeit als erste und zweite Flüssigkeit verwendet wird.

11. Verfahren nach Anspruch 1, wobei das Verfahren ein Environmental Stress Screening-Test ist.

12. Verfahren nach Anspruch 11, wobei bei dem Environmental Stress Screening-Test:
(a) das elektronische Bauteil in ein kaltes Bad aus einer inerten Flüssigkeit eingetaucht wird;
(b) an das elektronische Bauelement nach dem Verstreichen eines ersten vordefinierten Zeitraums Versorgungsspannungen angelegt werden, die über den höchsten Arbeitsspannungen liegen;
(c) die Versorgungsspannungen von dem elektronischen Bauelement abgeklemmt werden;
(d) das elektronische Bauelement innerhalb eines zweiten vordefinierten Zeitraums von dem kalten Bad in ein heißes Bad aus einer inerten Flüssigkeit überführt wird;
(e) an das elektronische Bauelement die Versorgungsspannungen angelegt werden, die über den höchsten Arbeitsspannungen liegen, während das elektronische Bauelement in dem heißen Bad eingetaucht ist;
(f) die Versorgungsspannungen von dem elektronischen Bauelement abgeklemmt werden; und
(g) die Schritte (a) bis (f) für eine vorbestimmte Anzahl von Spielen wiederholt wird, und wobei die Testflüssigkeit die inerte Flüssigkeit des kalten Bades und/oder die inerte Flüssigkeit des heißen Bades ist.

13. Verfahren nach Anspruch 12, wobei das kalte Bad bei einer Temperatur von unter 0°C und das heiße Bad bei einer Temperatur von über 65°C gehalten wird.

14. Verfahren nach Anspruch 1, wobei das Verfahren ein Flüssigkeitseinbrenntest ist.

15. Verfahren nach Anspruch 14, wobei bei dem Flüssigkeitseinbrenntest das elektronische Bauteil in der Testflüssigkeit bei 100°C angeordnet wird, daran eine Spannung angelegt und die Temperatur der Testflüssigkeit allmählich auf eine Temperatur zwischen 125°C und 250°C angehoben wird.

16. Verfahren nach einem der Ansprüche 1 bis 15, wobei der Hydrofluorether der folgenden Formel entspricht:
R_{f}(ORₕ)ₙ
wobei:
R_{f} eine perfluorierte Alkylgruppe;
Rₙ eine Alkylgruppe;
n eine Zahl zwischen 1 und 3 ist und
wobei die Anzahl der in R_{f} enthaltenen Kohlenstoffatome größer ist als die Gesamtzahl der in allen Rₕ-Gruppen enthaltenen Kohlenstoffatome.

17. Verfahren nach einem der Ansprüche 1 bis 15, wobei der Hydrofluorether ausgewählt ist aus der Gruppe bestehend aus C₄F₉-OCH₃, C₄F₉-OC₂H₅, c-C₆F₁₁CF₂-OCH₃ und CF₃-O-c-C₆F₁₁-CF₂-O-CH₃.

18. Verfahren nach Anspruch 4, wobei die Testflüssigkeit die Detektorflüssigkeit ist und der Hydrofluorether ausgewählt ist aus der Gruppe bestehend aus C₃F₇OCH₅, C₄F₉OCH₃, C₄F₉OC₂H₅, C₅F₁₁OCH₃, C₅F₁₁OC₂H₅, C₄F₉OC₃H₇ und c-C₆F₁₁-OCH₃.

19. Verfahren nach Anspruch 4, wobei die Testflüssigkeit die Indikatorflüssigkeit ist und der Hydrofluorether ausgewählt ist aus der Gruppe bestehend aus C₇F₁₅-OCH₃, C₇F₁₅-OC₂H₅, c-C₆F₁₁-CF₂-OC₂H₅, CF₃-O-c-C₆F₁₁-CF₂-OCH₃ und C₈F₁₇OCH₃.

20. Verfahren nach Anspruch 7, wobei der Hydrofluorether ausgewählt ist aus der Gruppe bestehend aus C₄F₉OCH₃, C₄F₉OC₂H₅, C₃F₇OCH₃, c-C₆F₁₁-OCH₃, c-C₆F₁₁-OC₂H₅, c-C₆F₁₁-CF₂-OC₂H₅, c-C₆F₁₁-CF₂OC₂H₅, CF₃CF(OCH₃)CF(CF₃)₂, CF₃CF(OC₂H₅)CF(CF₃)₂, (C₂F₅)CF(OCH₃)CF(CF₃)₂, CF₃O(c-C₆F₁₀)CF₂OCH₃, C₄F₉O[CF(CF₃)CF₂O]₂CH₃, C₄F₉O[CF(CF₃)CF₂O]₃CH₃, (c-C₆F₁₁)CF₂O[CF(CF₃)CF₂O]₂CH₃ und

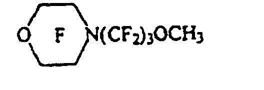

## Revendications

1. Procédé pour tester un composant électronique comprenant l'exposition du composant électronique à un liquide de test **caractérisé en ce que** ledit liquide de test contient un hydrofluoroéther qui est essentiellement non inflammable, dans une quantité de 90% à 100% en poids.

2. Procédé selon la revendication 1, dans lequel ledit procédé est choisi parmi le groupe constitué de :
(a) procédés de test de fermeture hermétique pour tester l'herméticité d'une cavité fermée à l'intérieur d'un boîtier électronique ;
(b) procédés de test de résistance au choc thermique ;
(c) procédés de test d'examen de sollicitations dues à l'environnement ; et
(d) procédés de test de vieillissement préalable dans un liquide.

3. Procédé selon la revendication 1 dans lequel ledit procédé est un test de fermeture hermétique pour tester l'herméticité d'une cavité fermée dans un boîtier électronique.

4. Procédé selon la revendication 3 dans lequel ledit test de fermeture hermétique est un test de fuite franche comprenant, dans l'ordre donné, les étapes de :
(a) bombarder sous pression le boîtier électronique dans un bain de fluide détecteur ;
(b) retirer ledit boîtier électronique dudit bain de fluide détecteur et laisser le boîtier électronique sécher ;
(c) immerger le boîtier électronique dans un fluide indicateur à une température au-dessus du point d'ébullition dudit fluide détecteur ; et
(d) observer l'apparition éventuelle de bulles, lesdites bulles étant indicatrices de fuites et dans lequel ledit liquide de test est ledit fluide détecteur ou ledit liquide indicateur.

5. Procédé selon la revendication 3 dans lequel ledit test de fermeture hermétique est un test de fuite franche comprenant, dans l'ordre donné, les étapes de :
(a) peser ledit boîtier électronique ;
(b) bombarder sous pression le boîtier électronique dans un bain de fluide détecteur ;
(c) retirer ledit boîtier électronique dudit bain de fluide détecteur et laisser le boîtier électronique sécher ;
(d) peser ledit boîtier électronique, un gain de poids dudit boîtier électronique indiquant des fuites,
et dans lequel ledit liquide de test est ledit fluide détecteur.

6. Procédé selon la revendication 3 dans lequel ledit test de fermeture hermétique est un test de fuite franche comprenant, dans l'ordre donné, les étapes de :
(a) bombarder sous pression le boîtier électronique dans un bain de fluide détecteur, tenter ainsi d'introduire le fluide détecteur dans la cavité ;
(b) retirer ledit boîtier électronique dudit fluide détecteur pour permettre à une quantité de fluide détecteur de se vaporiser et de se dégager de ladite cavité comme une indication de fuite ; et
(c) détecter la vapeur détectrice se dégageant par une technique analytique.

7. Procédé selon la revendication 1 dans lequel ledit procédé est un test de résistance au choc thermique.

8. Procédé selon la revendication 7 dans lequel ledit test de résistance au choc thermique comprend les étapes de soumission dudit composant électronique dans un premier liquide à une température entre -75°C et -25°C et de soumission dudit composant électronique dans un second liquide à une température entre 100°C et 210°C et dans lequel ledit liquide de test est ledit premier liquide et/ou ledit second liquide.

9. Procédé selon la revendication 8 dans lequel ledit hydrofluoroéther a un point de congélation inférieur à -25°C et/ou un point d'ébullition supérieur à 100°C.

10. Procédé selon la revendication 8 dans lequel ledit hydrofluoroéther a un point de congélation inférieur à -25°C et un point d'ébullition supérieur à 100°C et dans lequel ledit liquide de test est utilisé comme lesdits premier et second liquides.

11. Procédé selon la revendication 1 dans lequel ledit procédé est un test de sélection des contraintes dues à l'environnement.

12. Procédé selon la revendication 11 dans lequel ledit test de sélection des contraintes dues à l'environnement comprend les étapes de :
(a) immerger ledit composant électronique dans un bain froid d'un liquide inerte ;
(b) appliquer des tensions d'alimentation en énergie au composant électronique en excès des tensions maximum de fonctionnement pendant une première période de temps prédéfinie s'écoulant;
(c) enlever les tensions d'alimentation en énergie du composant électronique ;
(d) transférer le composant électronique du bain froid à un bain chaud d'un liquide inerte endéans une seconde période de temps prédéfinie ;
(e) appliquer les tensions d'alimentation en énergie au composant électronique en excès des tensions maximum de fonctionnement pendant que le composant électronique est immergé dans le bain chaud ;
(f) enlever les tensions d'alimentation en énergie du composant électronique ; et
(g) répéter les étapes (a) à (f) pendant un nombre de cycles prédéfini,
et dans lequel ledit liquide de test est ledit liquide inerte dudit bain froid et/ou ledit liquide inerte dudit bain chaud.

13. Procédé selon la revendication 12 dans lequel ledit bain froid est maintenu à une température inférieure à 0°C et ledit bain chaud à une température supérieure à 65°C.

14. Procédé selon la revendication 1 dans lequel ledit procédé est un test de vieillissement préalable dans un liquide.

15. Procédé selon la revendication 14 dans lequel ledit test de vieillissement préalable dans un liquide comprend les étapes de placement dudit composant électronique dans ledit liquide de test à 100°C, d'application d'une tension et graduellement d'augmentation de la température dudit liquide de test à une température entre 125°C et 250°C.

16. Procédé selon l'une quelconque des revendications 1 à 15 dans lequel ledit hydrofluoroéther correspond à la formule suivante :
R_{f}(ORₕ)ₙ
dans laquelle :
R_{f} est un groupement alkyle perfluoré ;
Rₕ est un groupement alkyle ;
n est un entier de 1 à 3 ; et
dans lequel le nombre d'atomes de carbone contenus dans R_{f} est plus grand que le nombre total d'atomes de carbone contenus dans tous les groupements Rₕ.

17. Procédé selon l'une quelconque des revendications 1 à 15 dans lequel ledit hydrofluoroéther est choisi parmi le groupe constitué de C₄F₉-OCH₃, C₄F₉-OC₂H₅, c-C₆F₁₁CF₂-OCH₃ et CF₃-O-c-C₆F₁₁-CF₂-O-CH₃.

18. Procédé selon la revendication 4 dans lequel ledit liquide de test est ledit liquide détecteur et ledit hydrofluoroéther est choisi parmi le groupe constitué de C₃F₇OC₂H₅, C₄F₉OCH₃, C₄F₉OC₂H₅, C₅F₁₁OCH₃, C₅F₁₁OC₂H₅, C₄F₉OC₃H₇ et c-C₆F₁₁-OCH₃.

19. Procédé selon la revendication 4 dans lequel ledit liquide de test est ledit fluide indicateur et ledit hydrofluoroéther est choisi parmi le groupe constitué de C₇F₁₅-OCH₃, C₇F₁₅-OC₂H₅, c-C₆F₁₁-CF₂-OC₂H₅, CF₃-O-c-C₆F₁₁-CF₂-OCH₃ et C₈F₁₇OCH₃.

20. Procédé selon la revendication 7 dans lequel ledit hydrofluoroéther est choisi parmi le groupe constitué de C₄F₉OCH₃, C₄F₉OC₂H₅, C₃F₇OCH₃, c-C₆F₁₁-OCH₃, c-C₆F₁₁-OC₂H₅, c-C₆F₁₁-CF₂-OCH₃, c-C₆F₁₁-CF₂OC₂H₅, CF₃CF(OCH₃)CF(CF₃)₂, CF₃CF(OC₂H₅)CF(CF₃)₂, (C₂F₅)CF(OCH₃)CF(CF₃)₂, CF₃O(c-C₆F₁₀)CF₂OCH₃, C₄F₉O[CF(CF₃)CF₂O]₂CH₃, C₄F₉O[CF (CF₃)CF₂O]₃CH₃, (c-C₆F₁₁)CF₂O[CF(CF₃)CF₂O]₂CH₃ et
